# EUROPEAN PATENT SPECIFICATION

(11) **EP 4 361 455 B1**
(45) Date of publication and mention of the grant of the patent: **17.09.2025**
(21) Application number: 23204502.1
(22) Date of filing: 18.10.2023
(51) Int. Cl.: F16B 21/07

(54) **FASTENER CLIP**
BEFESTIGUNGSKLAMMER
ATTACHE DE FIXATION

(30) Priority: 27.10.2022 US 202263419948 P; 06.10.2023 US 202318482363
(43) Date of publication of application: 01.05.2024
(73) Proprietor: Termax Company, Lake Zurich, IL 60047 (US)
(72) Inventor: Dickinson, Daniel James, Lincolnshire 60069 (US); Friesorger, David, McHenry 60050 (US)
(74) Representative: Weinstein Services & Conseils

(56) References cited:
- EP-A1- 3 779 216
- US-A1- 2016 375 840

## Description

### A. Continuity and Background

This application claims priority to pending provisional patent application having a serial number 63/419,948 and a filing date of October 27, 2022, and a docket number of P063B. This application claims priority to pending patent application having a serial number 16/925,246 and a filing date of July 9, 2020, and a docket number of P063. This application claims priority to pending nonprovisional patent application having a serial number 18/116,304 and a filing date of March 2, 2023, and a docket number of P063A.

The invention relates generally to devices for fastening objects, and more particularly to a fastener clip assembly for insertion into an engagement structure, such as a vehicle chassis, a hollow substrate, a wall, a plate, or any suitable surface.

A number of devices and fasteners are currently available for fastening panels, such as body panels and automobile interior trim piece panels, to the chassis of a vehicle. As used herein, a body panel refers to, for example, any interior or exterior body panel on a vehicle, a plastic interior trim piece, door panel, headliner or any interior trim piece. Additionally, the panel may be any suitable exterior body panel, such as a fender, bumper, quarter panel, door panel head light, or taillight. The chassis of the vehicle may include any substrate, plate, body panel, doghouse, structural framework, chassis component or subcomponent, wall or any suitable object.

These conventional fastener devices provide approximately relatively equal levels of insertion and extraction force. These body panels often attach to the chassis of an automobile with a relatively high level of insertion force while providing a relatively low level of extraction force.

Fastener clips, such as two-piece fasteners (multi-piece), are known for attaching body panels to an automobile chassis. Two-piece fasteners are used so that if the panels are removed after original installation, such as to service the components in the body panel such as a door, they may be pulled apart so that one portion remains attached to the sheet metal while the other remains attached to the trim panel. The two pieces may also be reattached after separation. However, two-piece fasteners require manufacturing of multiple pieces and labor-intensive assembly of the two pieces and thus are relatively expensive. Multi-piece fasteners are disclosed in publications US20160375840 and EP3779216.

If the slot is off-center or if the sheet metal varies in thickness or if tolerances in production of the slot in the vehicle chassis or in the trim-piece exist, for example, then engagement of one portion of the slot in the chassis with one of the wings may not provide suitable frictional engagement. Twisting of the body panel will be likely more prevalent because less than all contact points are actually made with the slot of the vehicle chassis. As a result, conventional single piece fasteners do not self-align themselves when the fastener and the body panel are misaligned and are prone to wing breakage such that the fastener cannot be re-attached.

Conventional fasteners typically do not adequately secure the panel to the vehicle chassis having variations in slot size and location or sheet metal with different curvature or thicknesses throughout. Conventional single piece fasteners do not self-align themselves when the fastener and the body panel are misaligned and are prone to wing breakage such that the fastener cannot be re-attached. Also, conventional fasteners are not suitable when subjected to a variety of environmental conditions, such as in the presence of vibration at various levels of amplitude and frequency. For example, conventional fasteners of this type typically do not prevent or minimize the amount of buzzing, rattling or any other type of noise that may cause attention to the occupants of the vehicle or otherwise weaken the attachment. Conventional fasteners do not adequately accommodate various levels of production tolerances, such as various dimensions amongst, for example, the body panels as well as the vehicle chassis. Thus, conventional fastener devices typically do not self-align nor adequately fasten to a range of sheet metal thicknesses and do not minimize or eliminate buzzing and rattling and do not sufficiently accommodate variations in production tolerances. As a result, wear, squeaks, rattles, buzzing, corrosion and loss of elasticity and loss of sealing may result, especially after years of vehicle operation and exposure to vibration, heat, humidity, and other environmental conditions.

### B. Brief Description of the Drawings

Other objects and advantages of the invention may become apparent upon reading the detailed description and upon reference to the accompanying drawings.
Figure 1 is a perspective view of a fastener clip assembly, in accordance with some embodiments
Figure 2 is a perspective view of two pieces of a fastener clip, in accordance with some embodiments.
Figure 3 is another perspective view of two pieces of a fastener clip, in accordance with some embodiments.
Figure 4 is yet another perspective view of two pieces of a fastener clip, in accordance with some embodiments.
Figure 5 is yet another perspective view of two pieces of a fastener clip, in accordance with some embodiments.
Figure 6 is a perspective view of a blade configured to receive a fastener clip, in accordance with some embodiments.
Figure 7 is a perspective view of a fastener clip attached to a chassis, in accordance with some embodiments.
Figure 8 is an exploded view of a fastener clip, a tub, a body panel, a blade and a chassis, in accordance with some embodiments.
Figure 9 is a perspective view of a fastener clip, a tub, a body panel, a blade attached to a chassis, in accordance with some embodiments.
Figure 10 is a front view of a fastener clip, a tub, a body panel, a blade attached to a chassis, in accordance with some embodiments.
Figure 11 is a perspective view of a fastener clip, a tub attached to a blade, in accordance with some embodiments.
Figure 12 is a top view of a fastener clip, a tub attached to a blade, in accordance with some embodiments.
Figure 13 is a perspective view of a fastener clip, in accordance with some embodiments.
Figure 14 is a side view of the fastener clip during insertion according to an embodiment.
Figure 15 is a side view of the fastener clip during and after insertion according to an embodiment.
Figure 16 is a side view rotated 90 degrees of the fastener clip after insertion onto a clip according to an embodiment.
Figure 17 is a side view rotated 90 degrees of the fastener clip after insertion onto a clip and onto chassis according to an embodiment.
Figure 18 is a perspective view of a process step in a punch strip for the fastener clip.

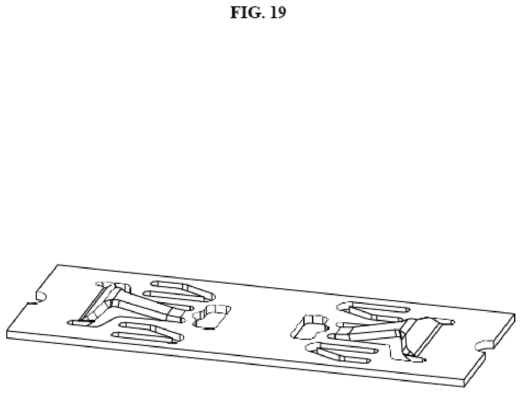

Figure 19 is a view of a stamping for the making of a fastener clip.

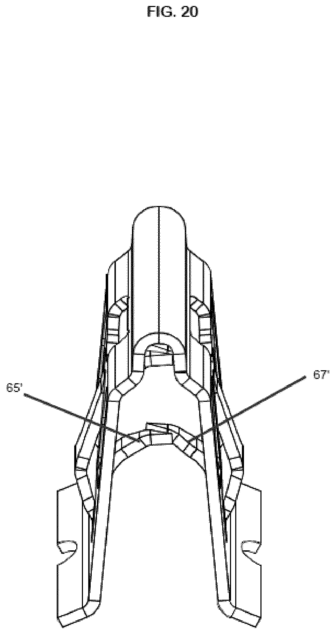

Figure 20 is a side view of the fastener clip according to an embodiment.

While the invention is subject to various modifications and alternative forms, specific embodiments thereof are shown by way of example in the drawings and the accompanying detailed description. It should be understood, however, that the drawings and detailed description are not intended to limit the invention to the particular embodiments. This disclosure is instead intended to cover all modifications, equivalents, and alternatives falling within the scope of the present invention as defined by the appended claims.

### C. Detailed Description of the Drawings

At least three embodiments of a fastener clip are described:

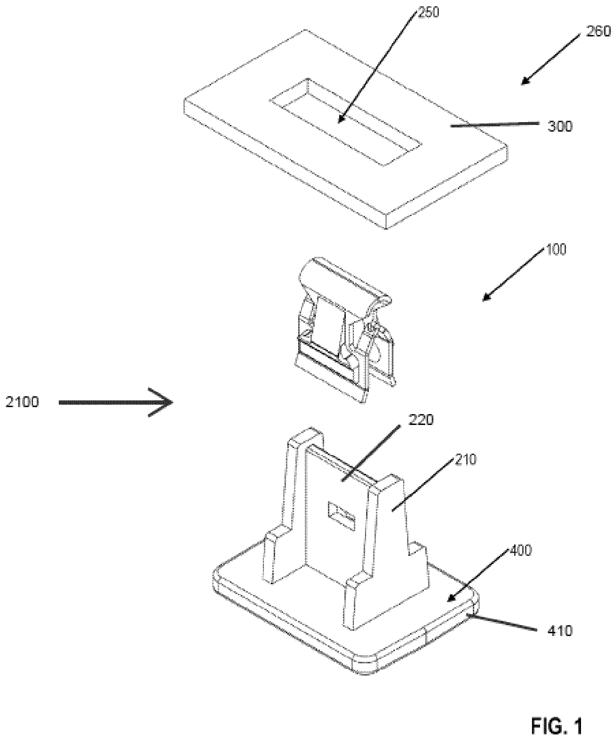

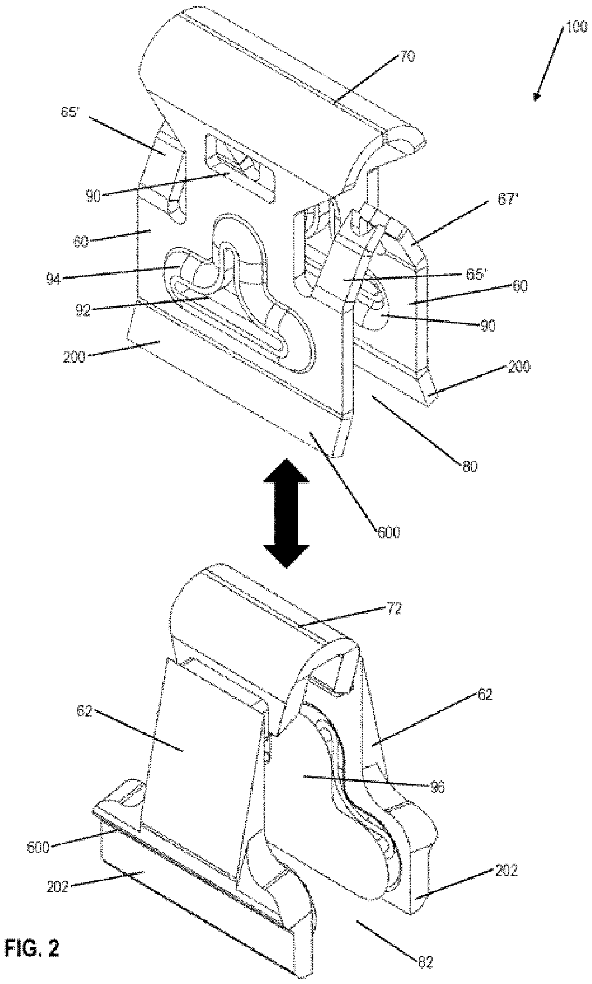

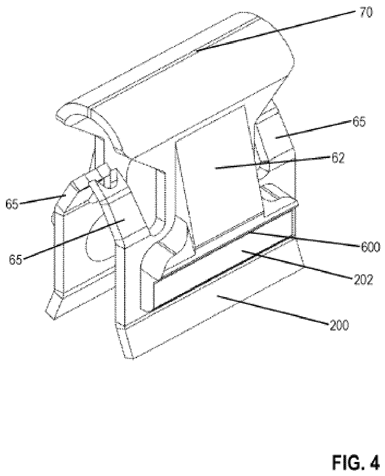

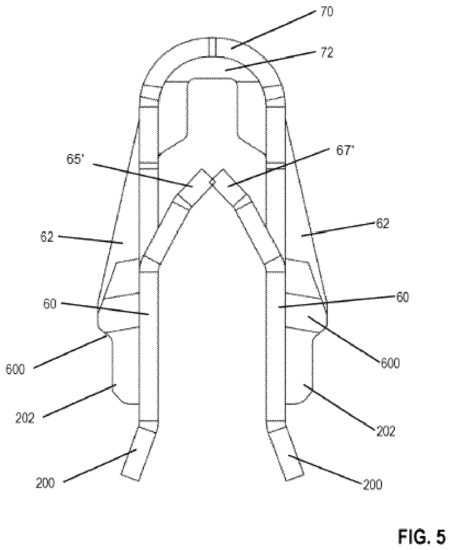

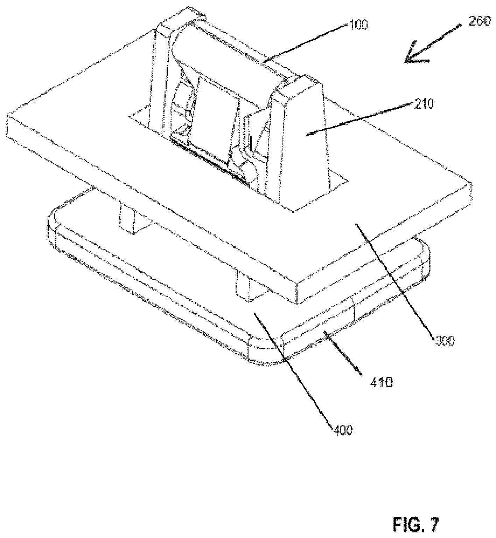

I) Figures 1 through 7 illustrate a fastener clip 100 which is not part of the invention having legs that spring in and out according to one embodiment.

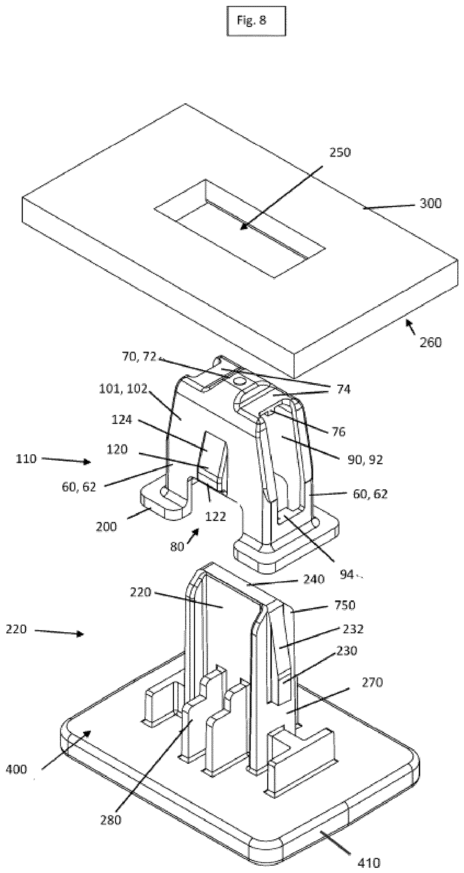

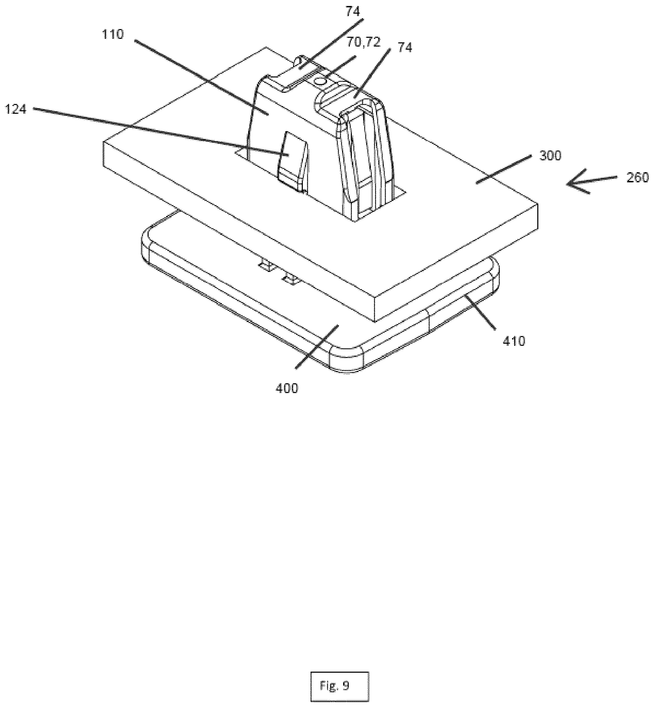

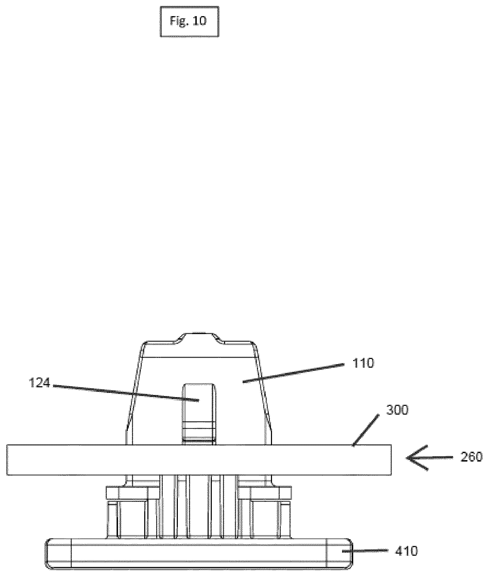

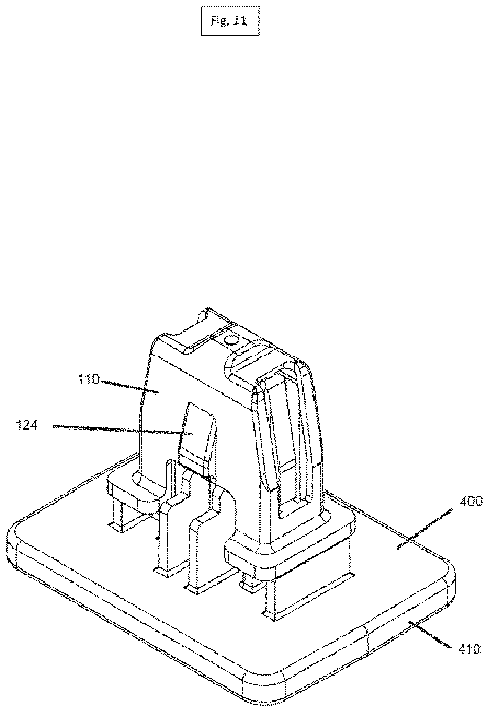

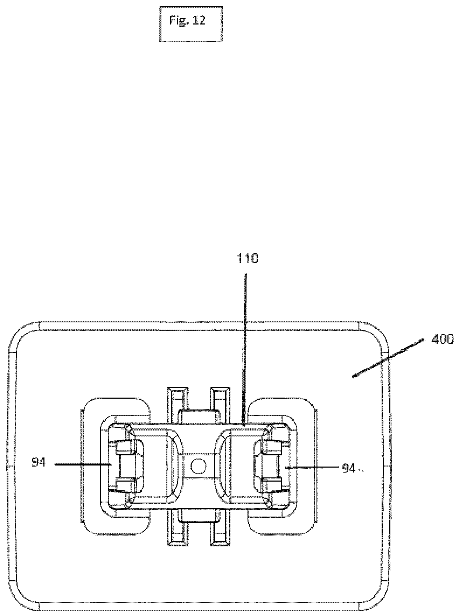

II) Figures 8 through 12 illustrate a tub type of fastener clip 110 which is not part of the invention according to a second embodiment.

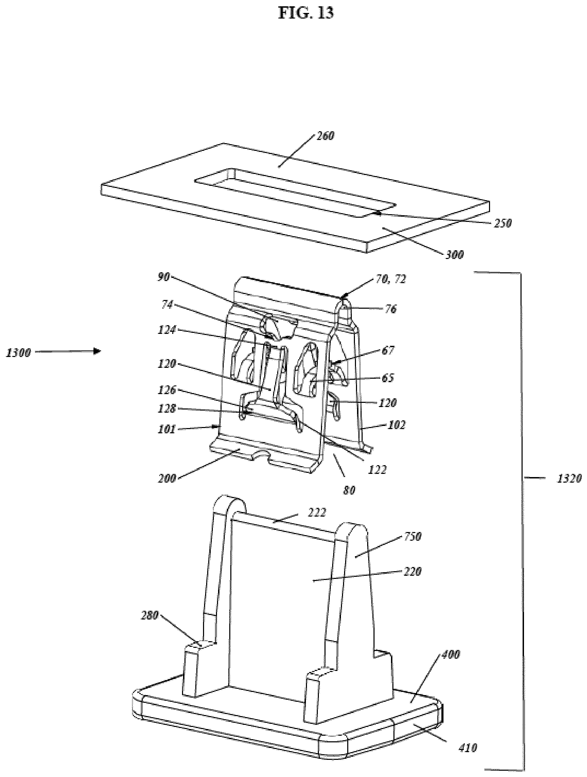

II) Figures 13 - 18 illustrate a fastener clip according to a third embodiment, which is the invention.

Figures 1 through 7 illustrate a fastener clip 100 according to one embodiment which is not part of the invention and are described in parent application serial number 16/925,246 with a filing date of July 9, 2020, and a docket number of P063.

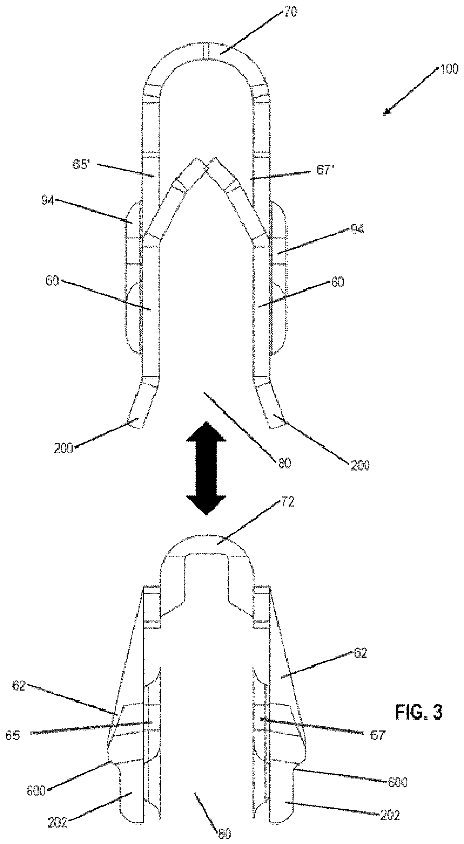

Figure 1 is a perspective view of a fastener clip assembly 2100 having legs that spring in and out, in accordance with some embodiments. Fastener clip 100 is configured to fasten a body panel 410 to a chassis 260. In this manner the fastener clip 100 can mate together the bottom surface 300 of chassis 260 with the top surface of body panel 410. Blade 220, which extends from the surface 400 of body panel 410, is configured to receive and be secured to the opening 80 (Fig 3) of the fastener clip 100. In some embodiments, blade 220 may be integrated, or unified or separately molded onto surface 400. In other embodiments, blade 220 may be attached to surface 400 using various other means with fasteners such as screws, pins, clips or glue.

In some embodiments, fastener clip 100 may be configured to be inserted through slot 250 of top surface 300 and to secure fastener clip 100 to the top surface 300. In some embodiments, the fastener clip assembly 2100 is configured to fasten together top surface 300 and surface 400 of body panel 410 based at least upon the fastener clip 100 being secured to slot 250 of surface 300 and to blade 220 of body panel 410 on surface 400.

In some embodiments, surface 400 may be part the top or bottom of body panel 410 and surface 300 may be part of the chassis/frame of an automobile. Accordingly, the fastener clip assembly 2100 may be configured to fasten together a body panel 410 to the chassis/frame 260 of an automobile. The distance between the surface 400 and surface 300 may be a zero gap such that the surfaces touch or engage each other. Thus, the body panel 410 has a curvature covering clip 100 such that the body panel 410 curves into and creates a zero gap with the chassis 400. Alternatively, the gap may be set as a design parameter such as to allow a predetermined distance between the two surfaces. The zero gap provides for the body panel 410 is substantially close to the surface 300 of chassis 260. For example, the optional stand offs 280 and a notch as shown in Fig. 8 provide a seat for the fastener clip 100.

Figures 8 through 12 which are not part of the invention are described in parent application serial number 18/116,304 with a filing date of March 2, 2023, and a docket number of P063A and provisional patent application 63/324,637 both incorporated by reference. In this embodiment, a tub type of fastener clip 100 is shown, a tub 110, a body panel 410, and a blade 220 attached to a chassis 260, in accordance with some embodiments.

Figures 13 - 18 illustrate a fastener clip having at least two projections 120 affixed to the sides 101, 102 at a top portion 124 and a bottom portion 126.

A system and method including a fastener clip 1300 may be configured to engage and be secured to a slot 250 in a chassis 260. The fastener clip 1300 comprises a pair of sides joined at a head portion, wherein the sides form a clip opening at a foot portion at an opposite end of the head portion. At least two projections are configured to engage a slot in a chassis and to secure the fastener clip to the chassis. The at least two projections having a top portion and a bottom portion, wherein the at least two projections are attached to the head portion along the top portion of each of the projections, on opposite sides of the clip. The at least two projections are attached to the foot portion along the width of the bottom portion of each projection, on opposite sides of the clip, such that the projection is affixed to the side. The bottom portion may have a width substantially wider than the top portion, of greater than 1, 2, 3 or more than a width of the top portion on the at least two projections. A bend along the width of the bottom portions of the projections engage the chassis to secure the clip to the slot in an engaged position.

Figure 13 is a perspective view of a fastener clip 1300, in accordance with some embodiments having affixed projections 120. The fastener clip 1300 may be configured to engage and be secured to a slot 250 in a chassis 260. The clip 1300 comprises a pair of sides 101, 102 joined at a head portion 70, 72, wherein the sides 101, 102 form a clip opening 80 at a foot portion 200 at an opposite end of the head portion 70, 72. At least two projections 120 are configured to engage a slot 250 in a chassis 260 and to secure the fastener clip 100 to the chassis 260.

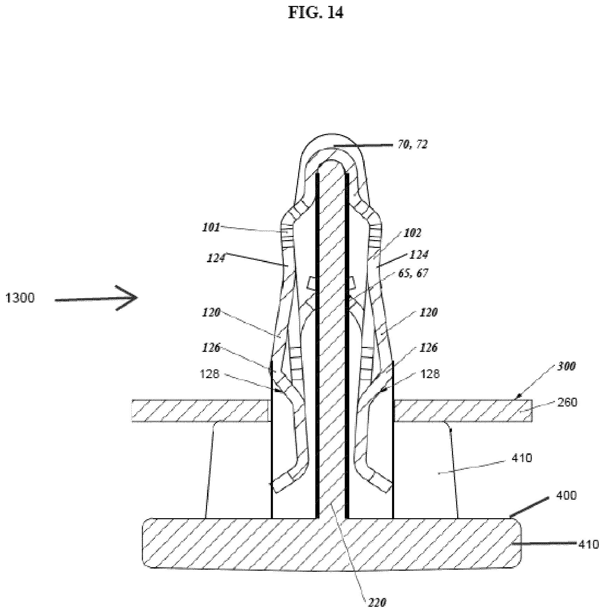

Figure 14 is a side view of the fastener clip 1300 during insertion according to an embodiment. The at least two projections 120 are affixed to the sides 101, 102 at a top portion 124 and a bottom portion 126. The at least two projections 120 are affixed and thus have relatively low degrees of springing. The projections 120 are attached to the head portion 70, 72 along the top portion 124 of each of the projections 120, on opposite sides of the clip 1300. The at least two projections 120 are also attached to the foot portion 200 along the width of the bottom portion 120 of each projection 120, on opposite sides of the fastener clip 100, such that the projection 120 is affixed to the respective sides 101, 102.

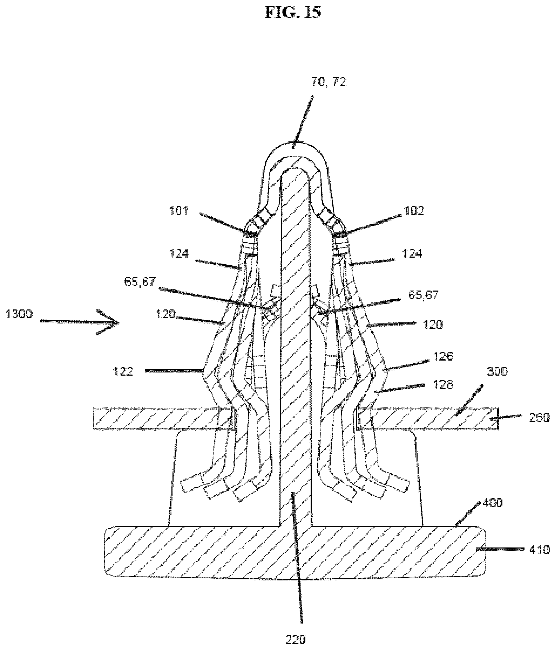

Figure 15 is a side view of the fastener clip during and after insertion according to an embodiment. In this embodiment the projection 120 are affixed to and thus move with the respective sides 101, 102. The bottom portion 126 may have a width substantially wider than the top portion, corresponding to a ratio of at least 1, 2, 3, 4 or more than a width of the top portion top portion 124 on the at least two projections 120. A bend on the bottom portion 126 and on the engagement region 128 along the width of the bottom portions 122 of the projections 120 engage the chassis 260 to secure the fastener clip 100 to the slot 250 in an engaged position. According to one embodiment the projections 120 do not substantially bend. Among other advantages the relative stiffness of the projections 120 provides high retention.

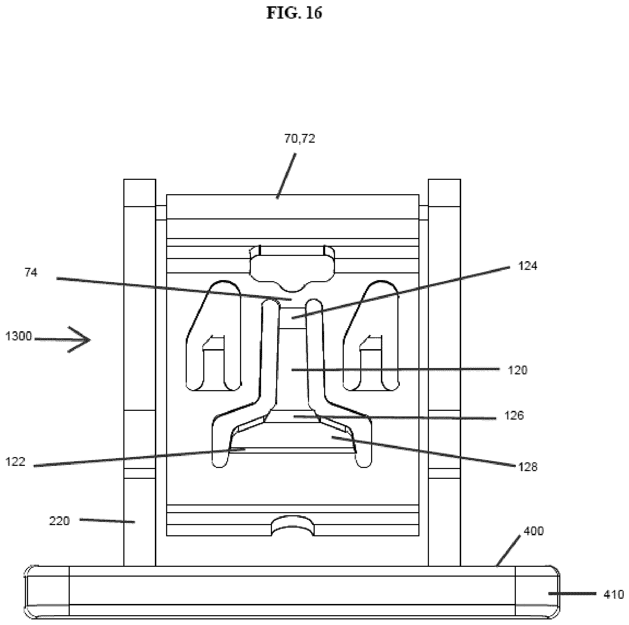

Figure 16 is a side view rotated 90 degrees of the fastener clip 1300 after insertion onto a according to an embodiment. Each of the projections 120 is tapered from a narrow width at the top portion 124 to a wide width at the bottom portion 126. As can also be seen in front views in Figure 13 and Figure 16, the projection is skinny or thin at the top 124 and thicker at the bottom 122 so that as the fastener clip 100 is inserted into a slot 250, the initial friction between the projection 120 and the slot 250 will result in low resistance and thus low insertion force and increasing as the projection 120 slides to the bottom portion 126. Also, since the projection 120 near the top 124 is relatively thin and thus will allow the projection 120 at this point to spring relatively easily, the projection 120 will flex initially as the fastener clip 100 is inserted into the slot 250 because the thin part of the projection 120 has less material and thus will spring more easily than the thicker part of the projection 120.

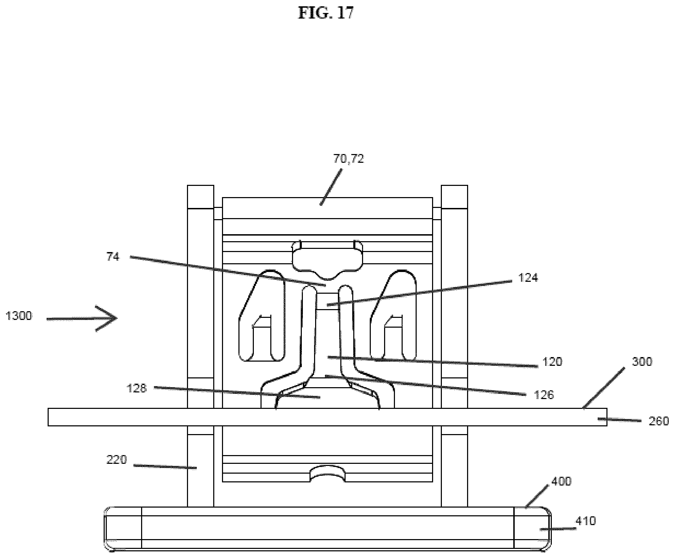

Figure 17 is a side view rotated 90 degrees of the fastener clip 1300 after insertion onto chassis 260 according to an embodiment. As the projection(s) 120 passes through the slot 250 and the retention feature or engagement region 128 passes the slot 250 edge such that the angle or bend 126 in the projection 120 passes the slot 250, then the relatively wide width of the projection 122 provides more contact area between the projection 122 and the slot 250 thus increasing friction and increasing the extraction force due to the increased surface contact. The retention feature may be an engagement region 128 and/or a bend 126 of an appropriate radius, angle and width. The retention feature may be ledge, valley or channel, a bulge, a rib, teeth or any suitable configuration to produce the design requirement of friction, engagement and extraction force. So, when the projection(s) 120 snaps outwardly after insertion into the slot 250, a second inner corner or crease in the engagement region 128 on the projection 120 makes contact along a line across the width of the projection 120 with the chassis slot 250.

The fastener clip 1300 includes one or more pairs of barbs 65, 67 coupled to the pair of sides 101, 102, wherein the barbs 65, 67 are configured to dig into a blade 220, wherein the blade 220 is configured to be coupled to a panel 400, wherein the fastener clip is configured to be secured over the blade 220 based at least upon the barbs 65, 67 being configured to dig into the blade 220 upon the fastener clip 1300 being pushed over the blade 220. According to one embodiment the barbs 65, 67 have bent tips 65', 67' such that as the projections 120 engage the slot 250 of the chassis 260, the bent barbs 65', 67' are configured to bend in response to the fastener clip 100 being inserted into the slot 250 and to then bend back to original positions of the bent barbs 65', 67'. The barbs 65, 67, 65', 67' may have 1, 2, 3 or any suitable number of more points.

As the fastener clip 100 is inserted into slot 250 the blade 220 is inserted into barbs 65, 67, 65', 67' such that the barbs 65, 67,65', 67' bite into blade 220 and flex inwardly or inboard. The slot 250 edges contact the projections 120. According to one embodiment, the fastener clip 100 features two resistance points, 1) the barbs 65, 67, 65', 67' engage and pivot on the blade 220 and in effect act as springs themselves and 2) the top, head or nose 70, 72 flexes at the very top. The order may be 1) 2) or 2) 1) or at the same time. In order to insert the clip 1300 into the slot 250, the barbs 65, 67, 65', 67' and top, head or nose 70, 72 flex in accordance with the slot 250 opening. The retention feature on the bottom portion 126 on projection 120 of clip 100 passes over the chassis slot 250. The projection(s) 120 is inserted past the chassis slot 250, then the sides 101, 102 snap back open. The clip 1300 thus has in effect two springs as stated, the barbs 65, 67, 65', 67' and the top 70, 72.

As shown in Figs. 14 and 15, as the fastener clip 100 is inserted such that the projections 120 engage the slot 250 of the chassis 260, the head portion 70, 72 and the barbs 65, 67, 65', 67' spring to allow the sides 101, 102 to compress toward each other.

As the bend shown in bottom portion 126 passes the slot 250, the head portion 70, 72 springs the sides 101, 102 outwardly until the engagement region 128 of the bottom portion 126 of the projection 120 engages the slot 250 when the fastener clip 100 is in an engaged position.

Once the fastener clip 100 is inserted into the slot 250, if an extraction force is applied to the blade 220, then the angle on the projections 120 will resist extraction and may expand outwardly increasing engagement of the retention feature while the barbs 65, 67, 65', 67' dig in with greater force thus firmly retaining the blade 220 into the slot 250. According to one embodiment, the retention feature and the barb 126 engagement are designed to produce an engagement limit such that above a specific extraction force, the fastener clip 100 will disengage. For example, the extraction force may be designed according to the requirements of the application such as the desired retention force to retain and/or disengage a body panel 410 to a chassis 260, such as less than 10, 10, 20, 30, 50, or 100 pounds or more of force or any suitable force. Among other advantages of the invention, the disengagement force is accurately controlled by designing a particular springing force for by the projection 120 retention feature, barb 65, 67, 65', 67' engagement region 128 and top 70', 72, spring. An advantage thus is the low insertion force yet high extraction force so that installation effort is significantly reduced. As such, the fastener clip 100 is ergonomically advantageous to assembly workers and robotic machinery because insertion effort is relatively low, yet the clip 1300 has a very high retention force to securely and reliably fasten the blade 220 and associated body panel 410 to the chassis 260. According to one embodiment the insertion force is 10 pounds of force for typical body panel 410 applications however the insertion force may be more, less or any suitable force according to the specific application and the corresponding requirements.

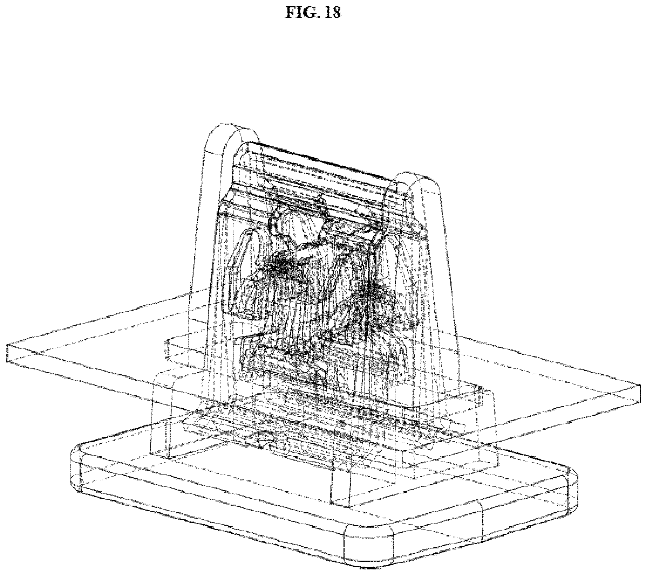

Figure 18 is a perspective view of the step process partial stamping for the fastener clip 100 according to an embodiment. The clip 1300 includes a stretch web 90 formed such that as the bends are formed, material from the stretch web 90 is displaced to form the bends such as the bend on bottom portion 126 and engagement region 128. With reference to the step process partial stamping shown in Figure 18, the stretch web 90 may be a specifically designed hole to provide corresponding springing characteristics. Projection(s) 120 may be formed according to one embodiment by punching out a Z portion 1810 on each side to form the projection 120 and then in a subsequent step stretching or bending the projection material to form the bend or knuckle having an angle, collectively referred to here as a stretch form. In other words, the punch deforms the projection 120 to form the angle. The stretch form creates a ledge on the retention feature 126 formed according to an angle. During the stretch form, the material thins relatively little and thus is not substantially thinning, but rather moves material from one position to another while bending the material. Bending the projection material nominally requires less force than displacing material. According to one embodiment, a stretch web or window is formed on each side between the top portion of the projection 120 and the head portion 70, 72 on each side 101, 102. Thus, as the stretch form is pressed, material from the stretch web 90 is displaced to form the material resulting in the bend 160. For example, as the Z portions 1810 are punched out in a punch press, the stretch web 90 may initially appear to be rectangle. In the operation to form the bend 128 and in the bottom portion 126 of the projection 120, the rectangle will be deformed, such as to form a semicircle or a larger semicircle, as material is displaced on the side of the rectangle closest to the top portion 70, 72 of the projection 120. According to one embodiment the stretch web 90 is formed with the rectangle and a semicircle in order to intentionally weaken the T-bridge so as to direct the movement of material more easily to form bend 126. Deep draw dies may similarly employ weakened material to direct the movement of material similar to the use of for example stretch webs.

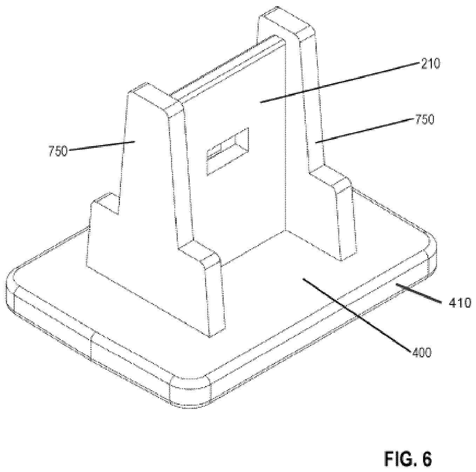

The fastener clip 100 is configured to couple the chassis 260 to the panel 400 based at least upon the fastener clip 100 being configured to be secured to a blade 220 and to the slot 250 in the chassis 260. The blade 220 comprises one or more flanges 750 (fig. 6) that are configured to add rigidity to the blade 22, and wherein the flanges 750 are configured to guide the fastener clip 100 onto the blade 220.

The projections 120 do not substantially bend during insertion and thus move relative to the sides 101, 102. In conventional clips, the projection was independent from the sides and would spring inwardly and then outwardly to open. The clip body, and sides 101, 102 spring inwardly then outwardly since the projection 120 stays rigid with respect to the sides 101, 102. Thus, the projection 120 functions to provide the retention feature 126. The retention feature 126 in one embodiment is a bend in the projection 120 to provide an angle appropriate for engaging the slot 250. The top portion 70, 72 springs and flexes and provides resistance against insertion of the fastener clip 100 into the slot 250. According to one embodiment, the projections 120 do not move relative to the sides. The springing functions are provided by the top portion 70, 72 and the engagement of the barbs 65, 67, 65', 67' relative to each other.

The head portion 70, 72 further comprise a channel 76 whereas the channel 76 engages a top portion 222 at the end of the blade 220. Thus, the channel 76 engages a top portion 222 of the blade 220 to maintain spring engagement. The top portion 70, 72 or nose has a channel 76 and is configured to engage and hold the blade 220 so that the fastener clip 100 resists rotation or rocking relative to the fastener clip 100. By reducing the slack, gap or space between the rib 220 and channel 76 and the inside of the top portion 222, the rib 220 has little or no movement inside the top portion 222. As such the clip 1300 will resist rocking relative to the clip 1300 and thus the projection 120 will maintain alignment and maximum contact with the slot 250. Thus, the top portion 222 and wide projection 120 features further stabilizes and reduces or eliminates the problem of the clip 1300 rotating about the rib 220 and thus reduces or eliminates the problem of the rotated clip 1300 and otherwise not engaging the slot 250 in an appropriate or otherwise parallel manner. As such the rib 220 and body panel 410 are stabilized with the clip 1300 and slot 250 so for example the body panel 410 will stay firmly affixed to the chassis 260 and eliminate or avoid rocking, rattling or any movement.

Yet another advantage is the wide retention feature 126, 128 of the projection 120 also will withstand rocking or rotation of the fastener clip 100 relative to the slot 250 because the projection 120 will stay in contact with the slot 250. According to another embodiment, the channel 76 can sit or rest into a nest formed into an insertion tool to allow reliable and fast insertion of the clip 1300 onto the blade 220.

According to another advantage and embodiment, a tier 1 supplier of the body panel 410 can pre-install the clip 1300 and deliver the body panel assembly 1320 with the fastener clip 100 and body panel 410 ready for final assembly. The OEM manufacturer may thus simply take the pre-assembled body panel assembly 1320 with the clip 1200 operative and ready for insertion into the slot 250 of the chassis 260.

The channel 76 keeps a compressive force by pushing down on the top portion 222 thus keeping the blade 220 in constant engagement with channel 76 by keeping the force on blade 220. Thus, the channel 76 keeps the blade 220 in tension and results in a force applied when inserted and after insertion. Among other advantages, the channel 76 reduces or prevents disengagement between channel 76 and blade 220 and thus reduces or eliminates buzz, squeaks and rattles (BSR).

Another advantage is that the increased surface area especially of the wide portion near the bottom 122 of the projection 120 provides increased contact with relatively soft materials such as a plastic chassis having a slot 250. Since the feature 126 of the projection 120 is relatively wide and thus has a relatively large contact and engagement area, the load is distributed about the projection 120 and chassis 260 slot 250 over a larger area. Since the load is distributed along a larger area, the slot 250 and chassis 260 will experience less or no damage so the clip 1300 and slot 250 may be reinserted and reused repeatedly for a relatively high number of re-applications including multiple detachments and reattachments. Prior art clips that have a retention feature of a single point of contact are essentially like a knife edge that will cut into the chassis slot 250 especially if the chassis 260 is relatively soft compared to the projection. Thus, If the material on the chassis slot 250 is cut, displaced, and now missing due to conventional prior art clips, then there will be less or no material on the slot for engaging the depression or coin feature.

Clip 1300 longevity and reliability can vary depending on the type of plating, painting, condition of the clip and chassis such as aging, fatigue, wear, temperature, humidity, vibration and so forth. Thus, the engagement force can vary depending on these conditions. However, a repeatable and reliable engagement force and thus repeatable and consistent extraction force is achieved as an advantage, requirement or goal with little variation even in the face of changing or varying conditions. For example, if a design requirement of 20 pounds of extraction force is desired and the above variations result in an extraction force less than 20 pounds then the extraction force results do not meet the design requirements.

Applications include attaching body panels 400 to a chassis 260. Body panels 400 could include A pillars, B, C pillars, and so forth. Further, the projection 120 at that point of contact may be at 122, 126, 128 for example or at any suitable point or combination where retention is required.

For example, the spring constant of the projections 120 may be designed based on the width, length and thickness of the projections 120 and sides 101, 102 as is understood by one skilled in the art. Each of the tabs or stand offs 280 on the rib 220 may be ramped and/or tapered from the top portion 222 to an end to form tapered tabs 280.

In other words, similar engagement may be achieved by designing the projection 120 and bend 126 functions to provide appropriate engagement with slot 250. The blade 220 would have a taper to allow the tab 280 stand offs on the inside of the fastener clip 100 to locate and guide the engagement of clip 1300 with rib 220.

Among other advantages, the rib 220 is strengthened compared to conventional ribs by among other things, "H" shaped rib ends or flanges 750 (Fig. 13). The "H" shaped rib ends or flanges for example add a rib flange 750 that is perpendicular to the rib 220 (and body panel 410) and add strength to the rib 220. The rib flange 750 forms an angle or a corner and thus the rib 220 with a flange 750 is much stronger than an unreinforced rib. Also, the rib 220 and flange 750 functions to locate the rib 220 as the rib 220 is inserted into the clip opening 80 and into barbs 65, 67, 65', 67'. For example, the rib flange 750 may be tapered to more easily center and locate the rib 220 as the rib 220 is inserted into the correspondingly shaped tapered or angled clip opening 80.

In some embodiments, fastener clip assembly 1320 comprises a clip 1300 that may be configured to engage and be secured to a slot 250 in a chassis 260. In some embodiments, the fastener clip 1300, is made of metal and the rib 220 and body panel 410 are manufactured by injection moldable plastic, acetal, nylon, metal or may be made of any suitable elastic/springy material.

The pair of feet 200 form a clip opening 80 (Fig. 13) at an opposite end of the head portion 70 to allow entry of a blade 220 to which clip 1300 is configured to attach. In some embodiments, sides 101, 102 terminate at the end opposite to head portion 70 to feet 200. Among other advantages, the projections 120 are affixed to the sides 101, 102 so upon insertion, the projections 120 do not flex or spring as in conventional fasteners.

In some embodiments, clip 1300 has opposite sides or walls 101, 102. The opposite ends across sides 101, 102 of the fastener clip 100 are connected by a bridge 74 at the head 70, 72.

In some embodiments, upon inserting the fastener clip 1300 over blade 220, the blade 220 is configured so channel 76 springs back against the blade 220. During insertion, blade 220 slides upwards towards channel 76. According to one embodiment, upon inserting the clip 1300 over blade 220, channel 76 may be configured to dig, compress or squeeze into the material of blade 220 to further increase the removal effort required to separate the fastener clip 100 from the blade 210.

In some embodiments, each projection 120 may include a sloping portion between top 124 and bottom 122 such that, while engaging slot 250, projection(s) 120 are configured to spring in and then spring back when clip 1300 engages the slot 250. In some embodiments, each projection(s) 120 may include at least one bend 126. The bend 126 is formed and is configured to engage a portion of the slot 250 of surface 300. The feet 200 would thus sandwich the chassis 260 on one side 300 while the projection 120 and optional depressed portion 122 engage the other side of the chassis 260. In some embodiments, slot 250 may have any shape such as a circle, a square, a rectangle, a pentagon, a hexagon, a polygon, an n-sided polygon where n is a whole number, an ellipse, an oval, etc. Another advantage of feet 200 is in the event the clip 1300 breaks, such as if the projection(s) 120 break and disengage in the slot 250, then rather than the fastener clip 100 falling into the chassis slot 250 the feet 200 prevent the tub 110 from falling into the slot 250. Otherwise, if the fastener clip 100 falls into the slot 250 then retrieval of the fastener clip 100 may be difficult especially if the chassis 260 is a closed cavity.

In some embodiments, the bend 126 may include, for example, an abrupt edge, a gradual angled edge, such as a curve, a single angled edge, a discrete multiangled edge or a pointed edge. The bend 126 may be formed on the depressed part of each projection 120 so as to engage the slot 250 to increase an extraction force for the fastener clip 1300 from the slot 250. The bend 126 may be sized to suitably engage slot 250 of the surface 300 in order to obtain the desired level of extraction force. According to one embodiment, the bend 126 may be a depression formed on projection 120. The size and shape of the bend 126 may be formed in any suitable manner in order to permit relatively easy insertion of the fastener clip 1300 into the slot 250 while increasing the extraction force.

For example, in one embodiment, the clip 1300, rib 220 and body panel 410 are manufactured by injection moldable plastic. In some embodiments, fastener clip 1300, body panel 410 and rib 220 may be made with a combination of metal and an injection moldable plastic. According to an alternative embodiment, the metal portion may be made first, using sheet metal made of steel and a stamping process, for example. For example, the plastic may be then injected around the metal. In some embodiments, the plastic may be injected both to the inside and to the outside of the metal clip as will be described further elsewhere.

One or more embodiments of the invention are described above. It should be noted that these and any other embodiments are exemplary and are intended to be illustrative of the invention rather than limiting. While the invention is widely applicable to various types of systems, a skilled person will recognize that it is impossible to include all of the possible embodiments and contexts of the invention in this disclosure. Upon reading this disclosure, many alternative embodiments of the present invention will be apparent to persons of ordinary skill in the art.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

The benefits and advantages that may be provided by the present invention have been described above with regard to specific embodiments. For example, the fastener clip 1300 has the advantage of making contact with the blade 220 under compression thus reducing BSR (buzz, squeaking and rattling). These benefits and advantages, and any elements or limitations that may cause them to occur or to become more pronounced are not to be construed as critical, required, or essential features of any or all of the claims. As used herein, the terms "comprises," "comprising," or any other variations thereof, are intended to be interpreted as non-exclusively including the elements or limitations that follow those terms. Accordingly, a system, method, or other embodiment that comprises a set of elements is not limited to only those elements and may include other elements not expressly listed or inherent to the claimed embodiment.

While the present invention has been described with reference to particular embodiments, it should be understood that the embodiments are illustrative and that the scope of the invention is not limited to these embodiments. Many variations, modifications, additions and improvements to the embodiments described above are possible. It is contemplated that these variations, modifications, additions and improvements fall within the scope of the invention as detailed within the following claims.

## Claims

1. A fastener clip (1300) comprising:
a pair of sides (101, 102) joined at a head portion (70, 72), wherein the sides form a clip opening at a foot portion (200) at an opposite end of the head portion;
at least two projections (120) are configured to engage a slot (250) in a chassis (260) and to secure the fastener clip to the chassis;
the at least two projections (120) having a top portion (124) and a bottom portion (126), wherein the at least two projections (120) are attached to the head portion (70, 72) along the top portion (124) of each of the projections (120), on opposite sides (101, 102) of the clip;
where the at least two projections (120) are attached to the foot portion (200) along the width of the bottom portion (126) of each projection (120), on opposite sides (101, 102) of the clip, such that the projection (120) is affixed to the side (101, 102);
wherein the bottom portion (126) has a width more than twice a width of the top portion (124) on the at least two projections (120); and
wherein a bend along the width of the bottom portions (126) of the projections (120) engage the chassis (260) to secure the clip (1300) to the slot (250).

2. The fastener clip (1300) of claim 1, further including one or more pairs of barbs (65, 67) coupled to the pair of sides (101, 102), wherein the barbs (65, 67) are configured to dig into a blade (220), wherein the blade (220) is configured to be coupled to a panel (400), wherein the fastener clip (1300) is configured to be secured over the blade (220) based at least upon the barbs (65, 67) being configured to dig into the blade (220) upon the fastener clip (1300) being pushed over the blade (220).

3. The fastener clip (1300) of claim 2, wherein as the clip is inserted such that the projections (120) engage the slot (250) of the chassis (260), the head portion (70, 72) and the barbs (65, 67) spring to allow the sides (101, 102) to compress toward each other; and
as the bend passes the slot (250) the head portion (70, 72) springs the sides outwardly until the bottom portion (126) of the projection (120) engages the slot (250) when the clip (1300) is in an engaged position.

4. The fastener clip of claim 1, wherein the projections (120) do not substantially bend.

5. The fastener clip of claim 1, wherein each of the projections (120) is tapered from a narrow width at the top portion (124) to a wide width at the bottom portion (126).

6. The fastener clip of claim 1, further including a stretch web (90) formed such that as the bend is formed, material from the stretch web (90) is displaced to form the bend.

7. The fastener clip of claim 1, wherein as the clip (1300) is inserted into the slot (250) of the chassis (260), the head portion (70, 72) springs to allow the sides (101, 102) to compress toward each other.

8. The fastener clip of claim 1, wherein the fastener clip (1300) is configured to couple the chassis (260) to the panel (400) based at least upon the fastener (1300) being configured to be secured to a blade (220) and to the slot (250) in the chassis (260).

9. The fastener clip of claim 1, wherein a blade (220) comprises one or more flanges (750) that are configured to add rigidity to the blade (220), and wherein the flanges (750) are configured to guide the clip (1300) onto the blade (220).

10. The fastener clip of claim 1, wherein the projections (120) are configured to move substantially with the sides (101, 102) of the clip (1300).

11. The fastener clip of claim 2, wherein the barbs (65, 67) have bent tips (65', 67') such that as the projections (120) engage the slot (250) of the chassis (260), the bent barbs (65, 67) are configured to bend in response to the clip (1300) being inserted into the slot (250) and to then bend back to original positions of the bent barbs (65, 67).

12. The fastener clip of claim 1, wherein the head portion (70, 72) further comprising a channel (76) whereas the channel (76) engages the blade (220) to engage a top portion (124) of the blade (220) to maintain spring engagement.

13. A fastener assembly system (1320) comprising:
a chassis (260) comprising a slot (250);
a panel (400) comprising a blade (220);
a fastener clip (1300) comprising:
a pair of sides (101, 102) joined at a head portion (70, 72), wherein the sides (101, 102) form a clip opening at a foot portion (200) at an opposite end of the head portion;
one or more pairs of barbs (65, 67) coupled to the pair of sides (101, 102), wherein the barbs (65, 67) are configured to dig into the blade (220), wherein the blade (220) is configured to be coupled to the panel (400), wherein the fastener clip (1300) is configured to be secured over the blade (220) based at least upon the barbs (65, 67) being configured to dig into the blade (220) upon the fastener clip (1300) being pushed over the blade (220);
at least two projections (120) are configured to engage a slot (250) in a chassis (260) and to secure the fastener clip (1300) to the chassis (260);
the at least two projections (120) having a top portion (124) and a bottom portion (126), wherein the at least two projections (120) are attached to the head portion (70, 72) along the top portion (124) of each of the projections (120), on opposite sides (101, 102) of the clip (1300);
where the at least two projections (120) are attached to the foot portion (200) along the width of the bottom portion (126) of each projection (120), on opposite sides (101, 102) of the clip, such that the projection is affixed to the side;
wherein the bottom portion (126) has a width more than twice a width of the top portion (124) on the at least two projections (120); and
wherein a bend along the width of the bottom portions (126) of the projections (120) engage the chassis (260) to secure the clip (1300) to the slot (250).

14. The fastener assembly system (1320) of claim 13, wherein as the clip (1300) is inserted such that the projections (120) engage the slot (250) of the chassis (260), the head portion (70, 72) and the barbs (65, 67) spring to allow the sides (101, 102) to compress toward each other.

15. The fastener assembly system of claim 13, wherein each of the projections (120) is tapered from a narrow width at the top portion (124) to a wide width at the bottom portion (126).

16. The fastener assembly system of claim 13, wherein the fastener clip (1300) is configured to couple the chassis (260) to the panel (400) based at least upon the fastener (1300) being configured to be secured to the blade (220) and to the slot (250) in the chassis (260).

17. The fastener assembly system of claim 13, wherein the projections (120) are configured to move substantially with the sides (101, 102) of the clip (1300).

18. The fastener assembly system of claim 13, wherein the barbs (65, 67) have bent tips (65', 67') such that as the projections (120) engage the slot (250) of the chassis (260), the bent barbs (65, 67) are configured to bend in response to the clip (1300) being inserted into the slot (250) and to then bend back to original positions of the bent barbs (65, 67).

19. The fastener assembly system of claim 13, wherein the head portion (70, 72) further comprising a channel (76) whereas the channel engages the blade (220) to engage a top portion (124) of the blade (20) to maintain spring engagement.

20. The fastener assembly system of claim 13, wherein the blade (220) comprises one or more flanges (750) that are configured to add rigidity to the blade (220), and wherein the flanges (750) are configured to guide the clip (1300) onto the blade (220).

21. The fastener assembly system of claim 13, wherein:
as the clip (1300) is inserted such that the projections (120) engage the slot (250) of the chassis (260), the head portion (70, 72) and the barbs (65, 67) spring to allow the sides (101, 102) to compress toward each other; and
as the bend passes the slot (250) the head portion (70, 72) springs the sides outwardly until the bottom portion (126) of the projection (120) engages the slot (250) when the clip (1300) is in an engaged position.

## Patentansprüche

1. Befestigungsklammer (1300), umfassend:
ein Paar von Seiten (101, 102), die an einem Kopfabschnitt (70, 72) verbunden sind, wobei die Seiten eine Klammeröffnung an einem Fußabschnitt (200) an einem gegenüberliegenden Ende des Kopfabschnitts bilden;
wobei mindestens zwei Vorsprünge (120) konfiguriert sind, um einen Schlitz (250) in einer Karosserie (260) einzugreifen und die Befestigungsklammer an der Karosserie zu befestigen;
wobei die mindestens zwei Vorsprünge (120) einen oberen Abschnitt (124) und einen unteren Abschnitt (126) aufweisen, wobei die mindestens zwei Vorsprünge (120) an dem Kopfabschnitt (70, 72) entlang des oberen Abschnitts (124) von jedem der Vorsprünge (120) auf gegenüberliegenden Seiten (101, 102) der Klammer angebracht sind;
wobei die mindestens zwei Vorsprünge (120) an dem Fußabschnitt (200) entlang der Breite des unteren Abschnitts (126) von jedem Vorsprung (120) auf gegenüberliegenden Seiten (101, 102) der Klammer befestigt sind, sodass der Vorsprung (120) an der Seite (101, 102) befestigt ist;
wobei der untere Abschnitt (126) eine Breite aufweist, die mehr als das Doppelte der Breite des oberen Abschnitts (124) an den mindestens zwei Vorsprüngen (120) ist; und
wobei eine Biegung entlang der Breite der unteren Abschnitte (126) der Vorsprünge (120) die Karosserie (260) eingreifen, um die Klammer (1300) an dem Schlitz (250) zu befestigen.

2. Befestigungsklammer (1300) nach Anspruch 1, der ferner ein oder mehrere Paare von Widerhaken (65, 67) beinhaltet, die mit dem Paar von Seiten (101, 102) gekoppelt sind, wobei die Widerhaken (65, 67) konfiguriert sind, um in eine Klinge (220) einzugraben, wobei die Klinge (220) konfiguriert ist, um mit einer Platte (400) gekoppelt zu werden, wobei die Befestigungsklammer (1300) konfiguriert ist, um über der Klinge (220) zumindest basierend auf den Widerhaken (65, 67) befestigt zu werden, die konfiguriert sind, um in die Klinge (220) einzugraben, wenn die Befestigungsklammer (1300) über die Klinge (220) geschoben wird.

3. Befestigungsklammer (1300) nach Anspruch 2, wobei beim Einsetzen der Klammer, sodass die Vorsprünge (120) den Schlitz (250) der Karosserie (260) eingreifen, der Kopfabschnitt (70, 72) und die Widerhaken (65, 67) einfedern, um zu ermöglichen, dass die Seiten (101, 102) aufeinander zu gedrückt werden; und
wenn die Biegung den Schlitz (250) passiert, der Kopfabschnitt (70, 72) die Seiten nach außen federt, bis der untere Abschnitt (126) des Vorsprungs (120) den Schlitz (250) eingreift, wenn der Klammer (1300) in einer eingegriffenen Position ist.

4. Befestigungsklammer nach Anspruch 1, wobei die Vorsprünge (120) sich im Wesentlichen nicht biegen.

5. Befestigungsklammer nach Anspruch 1, wobei jeder der Vorsprünge (120) von einer schmalen Breite an dem oberen Abschnitt (124) zu einer breiten Breite an dem unteren Abschnitt (126) verjüngt ist.

6. Befestigungsklammer nach Anspruch 1, die ferner eine dehnbare Bahn (90) umfasst, die gebildet ist, sodass beim Bilden der Biegung Material von der dehnbaren Bahn (90) verdrängt wird, um die Biegung zu bilden.

7. Befestigungsklammer nach Anspruch 1, wobei beim Einsetzen der Klammer (1300) in den Schlitz (250) der Karosserie (260) der Kopfabschnitt (70, 72) einfedert, um zu ermöglichen, dass die Seiten (101, 102) aufeinander zu gedrückt werden.

8. Befestigungsklammer nach Anspruch 1, wobei die Befestigungsklammer (1300) konfiguriert ist, um die Karosserie (260) mit der Platte (400) zu koppeln, und zumindest basierend darauf, dass die Befestigungsklammer (1300) konfiguriert ist, um an einer Klinge (220) und an dem Schlitz (250) in der Karosserie (260) befestigt zu werden.

9. Befestigungsklammer nach Anspruch 1, wobei eine Klinge (220) einen oder mehrere Flansche (750) umfasst, die konfiguriert sind, um der Klinge (220) Steifigkeit zu verleihen, und wobei die Flansche (750) konfiguriert sind, um die Klammer (1300) auf der Klinge (220) zu führen.

10. Befestigungsklammer nach Anspruch 1, wobei die Vorsprünge (120) konfiguriert sind, um sich im Wesentlichen mit den Seiten (101, 102) der Klammer (1300) zu bewegen.

11. Befestigungsklammer nach Anspruch 2, wobei die Widerhaken (65, 67) gebogene Spitzen (65', 67') aufweisen, sodass die gebogenen Widerhaken (65, 67) konfiguriert sind, um sich als Reaktion auf das Einführen der Klammer (1300) in den Schlitz (250) zu biegen, wenn die Vorsprünge (120) in den Schlitz (250) der Karosserie (260) eingreifen, und sich dann in die ursprünglichen Positionen der gebogenen Widerhaken (65, 67) zurückzubiegen.

12. Befestigungsklammer nach Anspruch 1, wobei der Kopfabschnitt (70, 72) ferner einen Kanal (76) umfasst, wobei der Kanal (76) die Klinge (220) eingreift, um in einen oberen Abschnitt (124) der Klinge (220) einzugreifen, um den Federeingriff aufrechtzuerhalten.

13. Befestigungsanordnungssystem (1320), umfassend: eine Karosserie (260), umfassend einen Schlitz (250);
eine Platte (400), umfassend eine Klinge (220);
eine Befestigungsklammer (1300), umfassend:
ein Paar von Seiten (101, 102), die an einem Kopfabschnitt (70, 72) verbunden sind, wobei die Seiten (101, 102) eine Klammeröffnung an einem Fußabschnitt (200) an einem gegenüberliegenden Ende des Kopfabschnitts bilden;
ein oder mehrere Paare von Widerhaken (65, 67), die mit dem Paar von Seiten (101, 102) gekoppelt sind, wobei die Widerhaken (65, 67) konfiguriert sind, um in die Klinge (220) einzugraben, wobei die Klinge (220) konfiguriert ist, um mit der Platte (400) gekoppelt zu werden, wobei die Befestigungsklammer (1300) konfiguriert ist, um über der Klinge (220) zumindest basierend auf den Widerhaken (65, 67) befestigt zu werden, die konfiguriert sind, um in die Klinge (220) einzugraben, wenn die Befestigungsklammer (1300) über die Klinge (220) geschoben wird;
wobei mindestens zwei Vorsprünge (120) konfiguriert sind, um einen Schlitz (250) in einer Karosserie (260) einzugreifen und die Befestigungsklammer (1300) an der Karosserie (260) zu befestigen;
wobei die mindestens zwei Vorsprünge (120) einen oberen Abschnitt (124) und einen unteren Abschnitt (126) aufweisen, wobei die mindestens zwei Vorsprünge (120) an dem Kopfabschnitt (70, 72) entlang des oberen Abschnitts (124) von jedem der Vorsprünge (120) auf gegenüberliegenden Seiten (101, 102) der Klammer (1300) angebracht sind;
wobei die mindestens zwei Vorsprünge (120) an dem Fußabschnitt (200) entlang der Breite des unteren Abschnitts (126) von jedem Vorsprung (120) auf gegenüberliegenden Seiten (101, 102) der Klammer befestigt sind, sodass der Vorsprung an der Seite befestigt ist;
wobei der untere Abschnitt (126) eine Breite aufweist, die mehr als das Doppelte der Breite des oberen Abschnitts (124) an den mindestens zwei Vorsprüngen (120) ist; und
wobei eine Biegung entlang der Breite der unteren Abschnitte (126) der Vorsprünge (120) die Karosserie (260) eingreifen, um die Klammer (1300) an dem Schlitz (250) zu befestigen.

14. Befestigungsanordnungssystem (1320) nach Anspruch 13, wobei beim Einsetzen der Klammer (1300), sodass die Vorsprünge (120) den Schlitz (250) der Karosserie (260) eingreifen, der Kopfabschnitt (70, 72) und die Widerhaken (65, 67) einfedern, um zu ermöglichen, dass die Seiten (101, 102) aufeinander zu gedrückt werden.

15. Befestigungsanordnungssystem nach Anspruch 13, wobei jeder der Vorsprünge (120) von einer schmalen Breite an dem oberen Abschnitt (124) zu einer breiten Breite an dem unteren Abschnitt (126) verjüngt ist.

16. Befestigungsanordnungssystem nach Anspruch 13, wobei die Befestigungsklammer (1300) konfiguriert ist, um die Karosserie (260) mit der Platte (400) zu koppeln, und zumindest basierend darauf, dass die Befestigungsklammer (1300) konfiguriert ist, um an der Klinge (220) und an dem Schlitz (250) in der Karosserie (260) befestigt zu werden.

17. Befestigungsanordnungssystem nach Anspruch 13, wobei die Vorsprünge (120) konfiguriert sind, um sich im Wesentlichen mit den Seiten (101, 102) der Klammer (1300) zu bewegen.

18. Befestigungsanordnungssystem nach Anspruch 13, wobei die Widerhaken (65, 67) gebogene Spitzen (65', 67') aufweisen, sodass die gebogenen Widerhaken (65, 67) konfiguriert sind, um sich als Reaktion auf das Einführen der Klammer (1300) in den Schlitz (250) zu biegen, wenn die Vorsprünge (120) in den Schlitz (250) der Karosserie (260) eingreifen, und sich dann in die ursprünglichen Positionen der gebogenen Widerhaken (65, 67) zurückzubiegen.

19. Befestigungsanordnungssystem nach Anspruch 13, wobei der Kopfabschnitt (70, 72) ferner einen Kanal (76) umfasst, wobei der Kanal die Klinge (220) eingreift, um in einen oberen Abschnitt (124) der Klinge (20) einzugreifen, um den Federeingriff aufrechtzuerhalten.

20. Befestigungsanordnungssystem nach Anspruch 13, wobei die Klinge (220) einen oder mehrere Flansche (750) umfasst, die konfiguriert sind, um der Klinge (220) Steifigkeit zu verleihen, und wobei die Flansche (750) konfiguriert sind, um die Klammer (1300) auf der Klinge (220) zu führen.

21. Befestigungsanordnungssystem nach Anspruch 13, wobei:
beim Einsetzen der Klammer (1300), sodass die Vorsprünge (120) den Schlitz (250) der Karosserie (260) eingreifen, der Kopfabschnitt (70, 72) und die Widerhaken (65, 67) einfedern, um zu ermöglichen, dass die Seiten (101, 102) aufeinander zu gedrückt werden; und
wenn die Biegung den Schlitz (250) passiert, der Kopfabschnitt (70, 72) die Seiten nach außen federt, bis der untere Abschnitt (126) des Vorsprungs (120) den Schlitz (250) eingreift, wenn der Klammer (1300) in einer eingegriffenen Position ist.

## Revendications

1. Attache de fixation (1300) comprenant :
une paire de côtés (101, 102) assemblés au niveau d'une partie de tête (70, 72), dans laquelle les côtés forment une attache s'ouvrant au niveau d'une partie de pied (200) à une extrémité opposée de la partie de tête ;
au moins deux saillies (120) sont configurées pour mettre en prise une fente (250) dans un châssis (260) et pour fixer l'attache de fixation au châssis ;
les au moins deux saillies (120) ayant une partie supérieure (124) et une partie inférieure (126), dans laquelle les au moins deux saillies (120) sont fixées à la partie de tête (70, 72) le long de la partie supérieure (124) de chacune des saillies (120), sur les côtés (101, 102) opposés de l'attache ;
où les au moins deux saillies (120) sont fixées à la partie de pied (200) le long de la largeur de la partie inférieure (126) de chaque saillie (120), sur les côtés (101, 102) opposés de l'attache, de sorte que la saillie (120) est fixée sur le côté (101, 102) ;
dans laquelle la partie inférieure (126) a une largeur supérieure à deux fois une largeur de la partie supérieure (124) sur les au moins deux saillies (120) ; et
dans laquelle un coude le long de la largeur des parties inférieures (126) des saillies (120) met en prise le châssis (260) pour fixer l'attache (1300) à la fente (250).

2. Attache de fixation (1300) selon la revendication 1, comprenant en outre une ou plusieurs paires d'ergots (65, 67) couplées à la paire de côtés (101, 102), dans laquelle les ergots (65, 67) sont configurés pour creuser dans une lame (220), dans laquelle la lame (220) est configurée pour être couplée à un panneau (400), dans laquelle l'attache de fixation (1300) est configurée pour être fixée sur la lame (220) basée au moins sur les ergots (65, 67) qui sont configurés pour creuser dans la lame (220) après que l'attache de fixation (1300) a été poussée sur la lame (220).

3. Attache de fixation (1300) selon la revendication 2, dans laquelle, lorsque l'attache est insérée de sorte que les saillies (120) mettent en prise la fente (250) du châssis (260), la partie de tête (70, 72) et les ergots (65, 67) font ressort pour permettre aux côtés (101, 102) de se comprimer entre eux ;
lorsque le coude passe par la fente (250), la partie de tête (70, 72) sollicite les côtés par élasticité vers l'extérieur jusqu'à ce que la partie inférieure (126) de la saillie (120) mette la fente (250) en prise lorsque l'attache (1300) est dans une position mise en prise.

4. Attache de fixation selon la revendication 1, dans laquelle les saillies (120) ne se plient sensiblement pas.

5. Attache de fixation selon la revendication 1, dans laquelle chacune des saillies (120) est progressivement rétrécie d'une largeur étroite à la partie supérieure (124) à une large largeur à la partie inférieure (126).

6. Attache de fixation selon la revendication 1, comprenant en outre une bande extensible (90) formée de sorte que lorsque le coude est formé, le matériau de la bande extensible (90) est déplacé pour former le coude.

7. Attache de fixation selon la revendication 1, dans laquelle, lorsque l'attache (1300) est insérée dans la fente (250) du châssis (260), la partie de tête (70, 72) fait ressort pour permettre aux côtés (101, 102) de se comprimer entre eux.

8. Attache de fixation selon la revendication 1, dans laquelle l'attache de fixation (1300) est configurée pour coupler le châssis (260) au panneau (400) basé au moins sur la fixation (1300) qui est configurée pour être fixée à une lame (220) et à la fente (250) dans le châssis (260).

9. Attache de fixation selon la revendication 1, dans laquelle une lame (220) comprend une ou plusieurs brides (750) qui sont configurées pour ajouter de la rigidité à la lame (220) et dans laquelle les brides (750) sont configurées pour guider l'attache (1300) sur la lame (220).

10. Attache de fixation selon la revendication 1, dans laquelle les saillies (120) sont configurées pour se déplacer sensiblement avec les côtés (101, 102) de l'attache (1300).

11. Attache de fixation selon la revendication 2, dans laquelle les ergots (65, 67) ont des pointes pliées (65', 67') de sorte que lorsque les saillies (120) mettent en prise la fente (250) du châssis (260), les ergots pliés (65, 67) sont configurés pour se plier en réponse à l'attache (1300) insérée dans la fente (250) et ensuite pour revenir aux positions d'origine des ergots (65, 67) pliés.

12. Attache de fixation selon la revendication 1, dans laquelle la partie de tête (70, 72) comprend en outre un canal (76), alors que le canal (76) met en prise la lame (220) pour mettre en prise une partie supérieure (124) de la lame (220) pour maintenir la mise en prise élastique.

13. Système d'ensemble de fixation (1320) comprenant :
un châssis (260) comprenant une fente (250) ;
un panneau (400) comprenant une lame (220) ;
une attache de fixation (1300) comprenant :
une paire de côtés (101, 102) assemblés au niveau d'une partie de tête (70, 72), dans lequel les côtés (101, 102) forment une attache s'ouvrant au niveau d'une partie de pied (200) à une extrémité opposée de la partie de tête ;
une ou plusieurs paires d'ergots (65, 67) couplées à la paire de côtés (101, 102), dans laquelle les ergots (65, 67) sont configurés pour creuser dans une lame (220), dans lequel la lame (220) est configurée pour être couplée à un panneau (400), dans lequel l'attache de fixation (1300) est configurée pour être fixée sur la lame (220) basée au moins sur les ergots (65, 67) qui sont configurés pour creuser dans la lame (220) après que l'attache de fixation (1300) a été poussée sur la lame (220) ;
au moins deux saillies (120) sont configurées pour mettre en prise une fente (250) dans un châssis (260) et pour fixer l'attache de fixation (1300) au châssis (260) ;
les au moins deux saillies (120) ayant une partie supérieure (124) et une partie inférieure (126), dans lequel les au moins deux saillies (120) sont fixées sur la partie de tête (70, 72) le long de la partie supérieure (124) de chacune des saillies (120), sur les côtés (101, 102) opposés de l'attache (1300) ;
où les au moins deux saillies (120) sont fixées à la partie de pied (200) le long de la largeur de la partie inférieure (126) de chaque saillie (120), sur les côtés opposés (101, 102) de l'attache, de sorte que la saillie est fixée au côté ;
dans lequel la partie inférieure (126) a une largeur supérieure à deux fois une largeur de la partie supérieure (124) sur les au moins deux saillies (120) ; et
dans lequel un coude le long de la largeur des parties inférieures (126) des saillies (120) met en prise le châssis (260) pour fixer l'attache (1300) à la fente (250).

14. Système d'ensemble de fixation (1320) selon la revendication 13, dans lequel lorsque l'attache (1300) est insérée de sorte que les saillies (120) mettent en prise la fente (250) du châssis (260), la partie de tête (70, 72) et les ergots (65, 67) font ressort pour permettre aux côtés (101, 102) de se comprimer entre eux.

15. Système d'ensemble de fixation selon la revendication 13, dans lequel chacune des saillies (120) est progressivement rétrécie d'une largeur étroite à la partie supérieure (124) à une large largeur à la partie inférieure (126) .

16. Système d'ensemble de fixation selon la revendication 13, dans lequel l'attache de fixation (1300) est configurée pour coupler le châssis (260) au panneau (400) basé au moins sur la fixation (1300) configurée pour être fixée à la lame (220) et à la fente (250) dans le châssis (260).

17. Système d'ensemble de fixation selon la revendication 13, dans lequel les saillies (120) sont configurées pour se déplacer sensiblement avec les côtés (101, 102) de l'attache (1300).

18. Système d'ensemble de fixation selon la revendication 13, dans lequel les ergots (65, 67) ont des pointes pliées (65', 67') de sorte que lorsque les saillies (120) mettent en prise la fente (250) du châssis (260), les ergots (65, 67) pliés sont configurés pour se plier en réponse à l'attache (1300) insérée dans la fente (250) et ensuite pour revenir aux positions d'origine des ergots (65, 67) pliés.

19. Système d'ensemble de fixation selon la revendication 13, dans lequel la partie de tête (70, 72) comprend en outre un canal (76), alors que le canal met en prise la lame (220) pour mettre en prise une partie supérieure (124) de la lame (20) pour maintenir la mise en prise élastique.

20. Système d'ensemble de fixation selon la revendication 13, dans lequel la lame (220) comprend une ou plusieurs brides (750) qui sont configurées pour ajouter de la rigidité à la lame (220), et dans lequel les brides (750) sont configurées pour guider l'attache (1300) sur la lame (220) .

21. Système d'ensemble de fixation selon la revendication 13, dans lequel :
lorsque l'attache (1300) est insérée de sorte que les saillies (120) mettent en prise la fente (250) du châssis (260), la partie de tête (70, 72) et les ergots (65, 67) font ressort pour permettre aux côtés (101, 102) de se comprimer entre eux ; et
lorsque le coude passe par la fente (250), la partie de tête (70, 72) sollicite les côtés par élasticité vers l'extérieur jusqu'à ce que la partie inférieure (126) de la saillie (120) mette en prise la fente (250) lorsque l'attache (1300) est dans une position mise en prise.
